(19) Europäisches Patentamt
European Patent Office
Office européen des brevets

(11) **EP 1 970 472 A1**

(12) **EUROPEAN PATENT APPLICATION**

(43) Date of publication:
**17.09.2008 Bulletin 2008/38**

(51) Int Cl.:
*C25B 15/02* (2006.01)  *H01M 8/04* (2006.01)
*H01M 8/06* (2006.01)  *H01M 16/00* (2006.01)

(21) Application number: **08250020.8**

(22) Date of filing: **03.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.03.2007 KR 20070025872**
**23.08.2007 KR 20070085131**

(71) Applicant: **Samsung Electro-Mechanics Co., Ltd**
**Yeongtong-gu**
**Suwon-si**
**Gyeonggi-do 443-743 (KR)**

(72) Inventors:
• **Gil, Jae-Hyoung**
  **Seoul 138-839 (KR)**
• **Jang, Jae-Hyuk**
  **Seongnam-si, gyeonggi-do 463-787 (KR)**
• **Kundu, Arunabha**
  **Suwon-si, Gyeonggi-do 443-755 (KR)**

(74) Representative: **Mounteney, Simon James**
**Marks & Clerk**
**90 Long Acre**
**London**
**WC2E 9RA (GB)**

(54) **Hydrogen generating apparatus and fuel cell power generation system controlling amount of hydrogen generation**

(57)  Hydrogen generating apparatus that is capable of controlling the amount of hydrogen generation. The hydrogen generating apparatus in accordance with an embodiment of the present invention has an electrolyzer (210), a first electrode, a second electrode, a variable resistance (530), which is located between the first electrode and the second electrode, a flow rate meter (510), which measures an amount of hydrogen generation in the second electrode, and a variable resistance controller (520), which receives a set value, compares the amount of hydrogen generation measured by the flow rate meter with the set value, and controls a resistance value of the variable resistance. The amount of hydrogen generation can be controlled by use of variable resistance. The generated hydrogen is supplied to a fuel cell (100). The power generating system may also include a rechargeable battery (700).

FIG. 5

**Description**

**BACKGROUND OF THE INVENTION**

Field of the Invention

The present invention relates to a hydrogen generating apparatus, more particularly to a hydrogen generating apparatus that can control the amount of generation of hydrogen supplied to a fuel cell.

Background Art

A fuel cell refers to an energy conversion apparatus that directly converts chemical energy of a fuel (hydrogen, LNG, LPG, methanol, etc.) and air to electricity and/or heat by means of an electrochemical reaction. Unlike a conventional power generation technology that requires fuel combustion, steam generation, or a turbine or power generator, the fuel cell technology needs no combustion process or driving device, thereby boosting energy efficiency and curbing environmental problems.

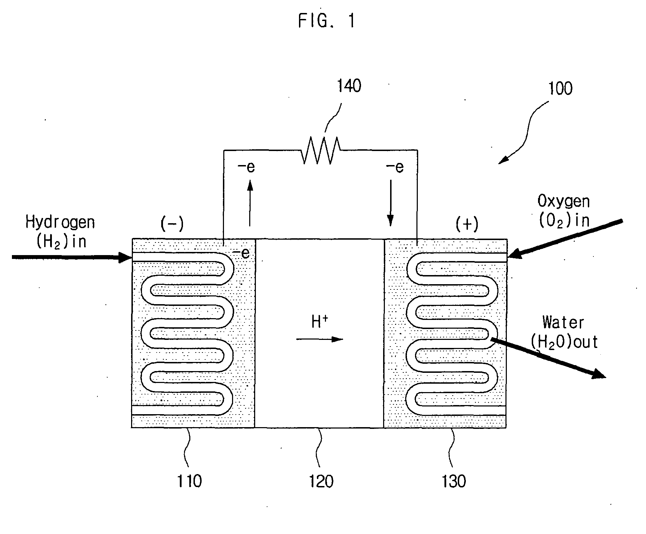

FIG. 1 illustrates an operational architecture of a fuel cell.

Referring to FIG. 1, a fuel cell 100 is composed of an anode as a fuel pole 110 and a cathode as an air pole 130. The fuel pole 110 is provided with hydrogen molecules ($H_2$), and decomposes them into hydrogen ions ($H^+$) and electrons ($e^-$). The hydrogen ion ($H^+$) moves toward the air pole 130 via a membrane 120, which is an electrolyte layer. The electron moves through an external circuit 140 to generate an electric current. In the air pole 130, the hydrogen ions and the electrons are combined with oxygen molecules in the atmosphere, generating water molecules. The following chemical formulas represent the above chemical reactions occurring in the fuel cell 100.

CHEMICAL FORMULA 1

Fuel pole 110: $H_2 \rightarrow 2H^+ + 2e^-$

Air pole 130: $1/2\ O_2 + 2H^+ + 2e^- \rightarrow H_2O$

Overall reaction: $H_2 + 1/2\ O_2 \rightarrow H_2O$

In short, the fuel cell 100 functions as a battery by supplying the electric current, generated due to the flowing of the decomposed electrons, to the external circuit 140. Such a fuel cell 100 hardly emits an atmospheric pollutant such as Sox and NOx and makes little noise and vibration.

Meanwhile, in order to produce electrons in the fuel pole 110, the fuel cell 100 necessitates a hydrogen generating apparatus that can change a common fuel to hydrogen gas.

A hydrogen storage tank, generally known as a hydrogen generating apparatus, however, occupies a large space and should be kept with care.

Moreover, as a portable electronic device, such as a mobile phone and a notebook computer, requires a large capacity of power, it is necessary that the fuel cell have a large capacity and perform high performance while it is small.

In order to meet the above needs, methanol or formic acid, permitted to be brought into an airplane by International Civil Aviation Organization (ICAO), is used for fuel reforming, or methanol, ethanol, or formic acid is directly used as a fuel for the fuel cell.

However, the former case requires a high reforming temperature, has a complicated system, consumes driving power, and contains impurities (e.g., $CO_2$ and CO) in addition to pure hydrogen. The latter case deteriorates power density due to a low rate of a chemical reaction in the anode and a cross-over of hydrocarbon through the membrane.

**SUMMARY OF THE INVENTION**

The present invention provides a hydrogen generating apparatus, a fuel cell power generation system, a method of controlling the quantity of hydrogen generation, and a recorded medium recorded with a program performing the method that can generate pure hydrogen at room temperature through an electrochemical reaction.

The present invention also provides a hydrogen generating apparatus, a fuel cell power generation system, a method of controlling the quantity of hydrogen generation, and a recorded medium recorded with a program performing the method that can control the quantity of hydrogen generation without a separate BOP (Balance of Plant) unit while maintaining a simple structure.

The present invention also provides a hydrogen generating apparatus, a fuel cell power generation system, a method of controlling the quantity of hydrogen generation, and a recorded medium recorded with a program performing the method that are economical and eco-friendly.

The present invention also provides a hydrogen generating apparatus, a fuel cell power generation system, a method of controlling the quantity of hydrogen generation, and a recorded medium recorded with a program performing the method that can control the quantity of hydrogen generation by use of variable resistance.

Moreover, the present invention provides a hydrogen generating apparatus, a fuel cell power generation system, a method of controlling the quantity of hydrogen generation, and a recorded medium recorded with a program performing the method that can prevent waste or risk of leaking surplus hydrogen in the air simply by turning on the switch and reduce the noise and power consumption by not using a gas pump or a liquid pump.

Moreover, the present invention provides a hydrogen generating apparatus that can control the amount of generation by use of feedback control according to the demand from a load connected to the fuel cell.

An aspect of the present invention features a hydrogen generating apparatus that is capable of controlling the amount of hydrogen generation by controlling resistance value of variable resistance.

The hydrogen generating apparatus in accordance with an embodiment of the present invention includes an electrolyzer, which is filled with an aqueous electrolyte solution, a first electrode, which is accommodated in the electrolyzer, is submerged in the aqueous electrolyte solution, and generates electrons, a second electrode, which is accommodated in the electrolyzer, is submerged in the aqueous electrolyte solution, and receives the electrons to generate hydrogen, a variable resistance, which is located between the first electrode and the second electrode, a flow rate meter, which measures an amount of hydrogen generation in the second electrode, and a variable resistance controller, which receives a set value, compares the amount of hydrogen generation measured by the flow rate meter with the set value, and controls a resistance value of the variable resistance.

The variable resistance controller can be inputted with the set value directly from a user through an input unit or a fuel cell being coupled to the hydrogen generating apparatus.

The metal forming the first electrode can have a higher ionization tendency than a metal forming the second electrode.

The variable resistance controller can decrease the amount of hydrogen generation by increasing a resistance value of the variable resistance or increase the amount of hydrogen generation by decreasing a resistance value of the variable resistance.

In detail, the variable resistance controller can compare the set value with the measured amount of hydrogen generation, and can decrease the resistance value of the variable resistance if the amount of hydrogen generation is smaller than the set value, increase the resistance value of the variable resistance if the amount of hydrogen generation is greater than the set value, and maintain the resistance value of the variable resistance if the amount of hydrogen generation is equal to the set value.

The set value has an upper limit and a lower limit, and the variable resistance controller can compare the set value with the measured amount of hydrogen generation, and can decrease the resistance value of the variable resistance if the amount of hydrogen generation is smaller than the lower limit, increase the resistance value of the variable resistance if the amount of hydrogen generation is greater than the upper limit, and maintain the resistance value of the variable resistance if the amount of hydrogen generation is between the lower limit and the upper limit.

The variable resistance can comprise a plurality of line resistances, and a plurality of MOS switches being coupled to each of the plurality of line resistances.

Another aspect of the present invention features a fuel cell power generation system including a hydrogen generating apparatus that is capable of controlling the amount of hydrogen generation.

The hydrogen generating includes a hydrogen generating apparatus, which controls an amount of hydrogen generation by controlling a resistance value of a variable resistance coupled between electrodes, a fuel cell, which is supplied with hydrogen generated by the hydrogen generating apparatus and converts chemical energy of the hydrogen to electrical energy, and a load, which is provided the electric energy and performing a predetermined operation.

The hydrogen generating apparatus in accordance with an embodiment of the present invention includes an electrolyzer, which is filled with an aqueous electrolyte solution, a first electrode, which is accommodated in the electrolyzer, submerged in the aqueous electrolyte solution, and generates electrons, a second electrode, which is accommodated in the electrolyzer, submerged in the aqueous electrolyte solution, receives the electrons to generate hydrogen, a variable resistance, which is located between the first electrode and the second electrode, a variable resistance controller, which receives a demanded power from the load, measuring an output of the fuel cell, compares the demanded power with the output, and controls the resistance value of the variable resistance. Here, a metal forming the first electrode has a higher ionization tendency than a metal forming the second electrode.

And, the variable resistance controller can reduce an amount of hydrogen generation by increasing the resistance value of the variable resistance or increase the amount of hydrogen generation by reducing the resistance value of the variable resistance.

Also, the variable resistance controller can compare the demanded power with the output, and increase the resistance value of the variable resistance if the output is greater than the demanded power, reduce the resistance value of the variable resistance if the output is smaller than the output, and maintain the resistance value of the variable resistance if the output is equal to the output.

The hydrogen generating apparatus in accordance with another embodiment of the present invention further includes a rechargeable battery, which is coupled between the fuel cell and the load, charged by the electric energy from the fuel cell, and provides the charged electric energy when the load needs

The hydrogen generating apparatus includes an electrolyzer, which is filled with an aqueous electrolyte solution, a first electrode, which is accommodated in the electrolyzer, submerged in the aqueous electrolyte solution, and generates electrons, a second electrode, which is accommodated in the electrolyzer, submerged in the aqueous electrolyte solution, receives the electrons to generate hydrogen, a variable resistance, which is located between the first electrode and the second electrode, a variable resistance controller, which measures a present voltage of the rechargeable battery, compares a fully-charged voltage with the present voltage, and controls the resistance value of the variable resistance. Here, a metal forming the first electrode has a higher ionization tendency than a metal forming the second electrode.

The variable resistance controller can reduce an amount of hydrogen generation by increasing the resistance value of the variable resistance or increase the amount of hydrogen generation by reducing the resistance value of the variable resistance.

In addition, the variable resistance controller can compare the present voltage with the fully-charged voltage, and reduce the resistance value of the variable resistance if the present voltage is smaller than the fully-charged voltage, and maximize the resistance value of the variable resistance if the present voltage is equal to or greater than the fully-charged voltage.

The variable resistance can comprise a plurality of line resistances, and a plurality of MOS switches being coupled to each of the plurality of line resistances.

Another aspect of the present invention features a method of controlling an amount of hydrogen generation in a hydrogen generating apparatus controlling an amount of hydrogen generation by controlling a resistance value of a variable resistance located between electrodes.

In an embodiment of the present invention, the method of controlling an amount of hydrogen generation in a hydrogen generating apparatus controlling an amount of hydrogen generation by controlling a resistance value of a variable resistance located between electrodes includes: being inputted with a set value; comparing a measured amount of hydrogen generation and the set value; and decreasing the resistance value of the variable resistance if the amount of hydrogen generation is smaller than the set value, increasing the resistance value of the variable resistance if the amount of hydrogen generation is greater than the set value, and maintaining the resistance value of the variable resistance if the amount of hydrogen generation is equal to the set value.

In another embodiment of the present invention, the method of controlling an amount of hydrogen generation includes: being inputted with an upper value and a lower value; comparing a measured amount of hydrogen generation with the upper value and the lower value; and decreasing the resistance value of a variable resistance if the amount of hydrogen generation is smaller than the lower value, increasing the resistance value of a variable resistance if the amount of hydrogen generation is greater than the upper value, and maintaining the resistance value of a variable resistance if the amount of hydrogen generation is between the lower value and the upper value.

In still another embodiment of the present invention, a method of controlling an amount of hydrogen generation in a hydrogen generating apparatus being coupled to a fuel cell of providing an electric energy to a load and controlling an amount of hydrogen generation by controlling a resistance value of a variable resistance located between electrodes, measures an output of the fuel cell, and receiving a demanded power from the load, compares the output with the demanded power, and increases the resistance value of the variable resistance if the output is greater than the demanded power, reduces the resistance value of the variable resistance if the output is smaller than the output, and maintains the resistance value of the variable resistance if the output is equal to the output.

In still another embodiment of the present invention, a method of controlling an amount of hydrogen generation in a hydrogen generating apparatus being coupled to a fuel cell of providing an electric energy to a load and controlling an amount of hydrogen generation by controlling a resistance value of a variable resistance located between electrodes, measures a present voltage of the rechargeable battery, compares the present voltage with a fully-charged voltage, and reduces the resistance value of the variable resistance if the present voltage is smaller than the fully-charged voltage, and maximizes the resistance value of the variable resistance if the present voltage is equal to or greater than the fully-charged voltage.

## BRIEF DESCRIPTION OF THE DRAWINGS

These and other features, aspects and advantages of the present invention will become better understood with regard to the following description, appended claims and accompanying drawings where:

FIG. 1 illustrates an operational architecture of a fuel cell;

FIG. 2 shows a sectional view of a hydrogen generating apparatus in accordance with an embodiment of the present invention;

FIG. 3 is a graph showing the power consumption of mobile phone;

FIG. 4 is a graph showing how the amount of electric current flowing between the first electrode and the second electrode is related to the volume of hydrogen generated on the second electrode;

FIG. 5 shows a block diagram of the control unit of the hydrogen generating apparatus in accordance with an embodiment of the present invention;

FIG 6 shows a fuel cell generating system comprising controller of hydrogen generating apparatus, fuel cell coupled thereto, and a load in accordance with another embodiment of the present invention;

FIG. 7 shows a fuel cell power generation system comprising controller of hydrogen generating apparatus, fuel cell coupled thereto, and a load in accordance with still another embodiment of the present invention;

FIG. 8 shows a graph indicating quantities of generated hydrogen, expressed in flow rate, when the resistance value of the variable resistance is 500mΩ;

FIG. 9 shows a graph indicating quantities of generated hydrogen, expressed in flow rate, when the resistance value of the variable resistance is 10mΩ;

FIG. 10 shows the relation between time and quantity of hydrogen generation when the variable resistance of the hydrogen generating apparatus is controlled in accordance with an embodiment of the present invention;

Fig. 11 shows an example of variable resistance in accordance with one embodiment of the present invention;

FIG. 12 is a flowchart showing a method of controlling the amount of hydrogen generation in a hydrogen generating apparatus in accordance with an embodiment of the present invention;

FIG. 13 is a flowchart showing a method of controlling the amount of hydrogen generation in a hydrogen generating apparatus in accordance with another embodiment of the present invention; and

FIG. 14 is a flowchart of a method of controlling the quantity of hydrogen generation in a hydrogen generating apparatus in accordance with another embodiment of the present invention.

## DESCRIPTION OF THE EMBODIMENTS

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the spirit and scope of the present invention. Throughout the drawings, similar elements are given similar reference numerals. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other. For instance, the first element can be named the second element, and vice versa, without departing the scope of claims of the present invention. The term "and/or" shall include the combination of a plurality of listed items or any of the plurality of listed items.

When one element is described as being "connected" or "accessed" to another element, it shall be construed as being connected or accessed to the other element directly but also as possibly having another element in between. On the other hand, if one element is described as being "directly connected" or "directly accessed" to another element, it shall be construed that there is no other element in between.

The terms used in the description are intended to describe certain embodiments only, and shall by no means restrict the present invention. Unless clearly used otherwise, expressions in the singular number include a plural meaning. In the present description, an expression such as "comprising" or "consisting of" is intended to designate a characteristic, a number, a step, an operation, an element, a part or combinations thereof, and shall not be construed to preclude any presence or possibility of one or more other characteristics, numbers, steps, operations, elements, parts or combinations thereof.

Unless otherwise defined, all terms, including technical terms and scientific terms, used herein have the same meaning as how they are generally understood by those of ordinary skill in the art to which the invention pertains. Any term that is defined in a general dictionary shall be construed to have the same meaning in the context of the relevant art, and, unless otherwise defined explicitly, shall not be interpreted to have an idealistic or excessively formalistic meaning.

Hereinafter, certain embodiments will be described in detail with reference to the accompanying drawings. Identical or corresponding elements will be given the same reference numerals, regardless of the figure number, and any redundant description of the identical or corresponding elements will not be repeated.

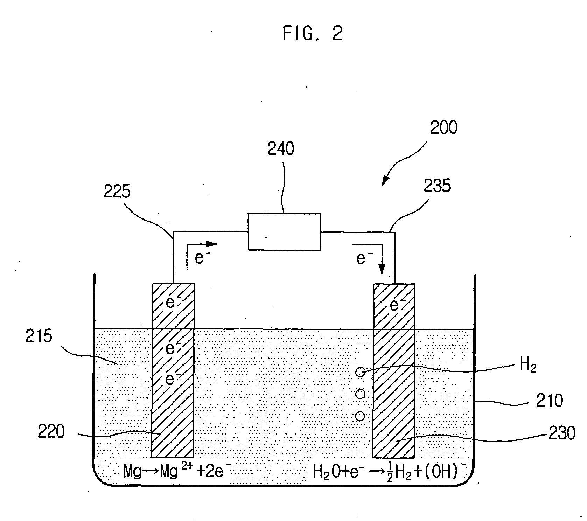

FIG. 2 is a sectional view of a hydrogen generating apparatus in accordance with an embodiment of the present invention.

A hydrogen generating apparatus 200 includes an electrolyzer 210, a first electrode 220, a second electrode 230 and a control unit 240. For the convenience of description and understanding, it will be presumed below that the first electrode 220 is composed of magnesium (Mg) and the second electrode 230 is composed of stainless steel.

The electrolyzer 210 is filled with an aqueous electrolyte solution 215. The aqueous electrolyte solution 215 contains hydrogen ions, which are used by the hydrogen generating apparatus 200 to generate hydrogen gas.

Examples of the electrolyte for the aqueous electrolyte solution 215 are $LiCl$, $KCl$, $NaCl$, $KNO_3$, $NaNO_3$, $CaCl_2$, $MgCl_2$, $K_2SO_4$, $Na_2SO_4$, $MgSO_4$, $AgCl$, or the like.

The electrolyzer 210 accommodates the first electrode 220 and the second electrode 230, the entirety or portions of which are submerged in the electrolyte solution 215.

The first electrode 220 is an active electrode, where the magnesium (Mg) is oxidized to magnesium ions ($Mg^{2+}$), releasing electrons due to the difference in ionization energies of magnesium and water. The released electrons move to the second electrode 230 through a first electric wire 225, the control unit 240 and a second electric wire 235.

The second electrode 230 is an inactive electrode, where the water molecules receive the electrons moved from the first electrode 220 and then are decomposed into the hydrogen molecules.

The above chemical reactions can be represented as the following chemical formula 2:

CHEMICAL FORMULA 2

First electrode 220: $Mg \rightarrow Mg^{2+} + 2e^-$

Second electrode 230: $2H_2O + 2e^- \rightarrow H_2 + 2(OH)^-$

Overall reaction: $Mg + 2H_2O \rightarrow Mg(OH)_2 + H_2$

The reaction rate and the efficiency of the chemical reaction depend on various factors, including the area of the first electrode 220 and/or the second electrode 230, the concentration of the aqueous electrolyte solution 215, the type of the aqueous electrolyte solution 215, the number of the first electrode 220 and/or the second electrode 230, the method of connecting the first electrode 220 and the second electrode 230, the electric resistance between the first electrode 220 and the second electrode 230.

Changing any of the above factors affects the amount of electric current (that is, the amount of electrons) flowing between the first electrode 220 and the second electrode 230, thereby altering the reaction rate of the electrochemical reaction shown in CHEMICAL FORMULA 2, which in turn changes the amount of hydrogen generated in the second electrode 230.

Therefore, the amount of the hydrogen generated in the second electrode 230 can be controlled by controlling the amount of the electric current that flows between the first electrode 220 and the second electrode 230. Faraday's law explains this as shown in MATHEMATICAL FORMULA 1 below.

MATHEMATICAL FORMULA 1

$$N_{hydrogen} = \frac{i}{nE}$$

$$N_{hydrogen} = \frac{i}{2 \times 96485} \ (mol)$$

$$V_{hydrogen} = \frac{i}{2 \times 96485} \times 60 \times 22400 \ (ml/\text{min})$$

$$= 7 \times i (ml/\text{min})$$

In the case of the above CHEMICAL FORMULA 2, n has a value of 2 since two electrons react at the second electrode 230, and E has a value of -96,485 C/mol.

The volume of hydrogen generated per minute can be calculated by multiplying the time (60 seconds) and the molar volume of hydrogen (22400ml) to the amount of hydrogen generated per second.

For example, in the case that the fuel cell is used in a 2W system, and it is assumed that the fuel cell is running a voltage of 0.6V at room temperature and that a hydrogen usage ratio is 60%, it takes 42ml/mol of hydrogen and 6A of electric current. In the case that the fuel cell is used in a 5W system, it takes 105ml/mol of hydrogen and 15A of electric current.

The hydrogen generating apparatus 200 can meet the variable hydrogen demand of the fuel cell connected thereto by controlling the amount of electric current flowing through the first electric wire 225, connected to the first electrode 220, and the second electric wire 235, connected to the second electrode 230.

However, most of the factors that determine the rate of the hydrogen generation reaction occurring in the second electrode of the hydrogen generating apparatus 200, except the electric resistance between the first electrode 220 and the second electrode 230, are hardly changeable once the hydrogen generating apparatus 200 is manufactured.

Therefore, the hydrogen generating apparatus 200 according to this embodiment of the present invention has the control unit 240 disposed between the first electric wire 225 and the second electric wire 235, which connect the first electrode 220 and the second electrode 230, in order to regulate the electric resistance between the first electrode 220 and the second electrode 230.

Thus, the hydrogen generating apparatus 200 controls the electric resistance between the first electrode 220 and the second electrode 230, that is, the amount of the electric current flowing therebetween, thereby generating as much hydrogen as needed by the fuel cell.

The first electrode 220 can be also composed of a metal having a relatively high ionization tendency, such as iron (Fe), aluminum (Al), zinc (Zn), or the like. The second electrode 230 can be also composed of a metal having a relatively low ionization tendency compared to the metal of the first electrode 220, such as platinum (Pt), aluminum (Al), copper (Cu), gold (Au), silver (Ag), iron (Fe), or the like.

The control unit 240 controls a transfer rate, that is, the amount of electric current, at which electrons generated in the first electrode 220 are transferred to the second electrode 230.

The control unit 240 receives information on power demanded for load coupled to the fuel cell and, according to the information, maintains, or increases or reduces the amount of electrons flowing from the first electrode 220 to the second electrode 230.

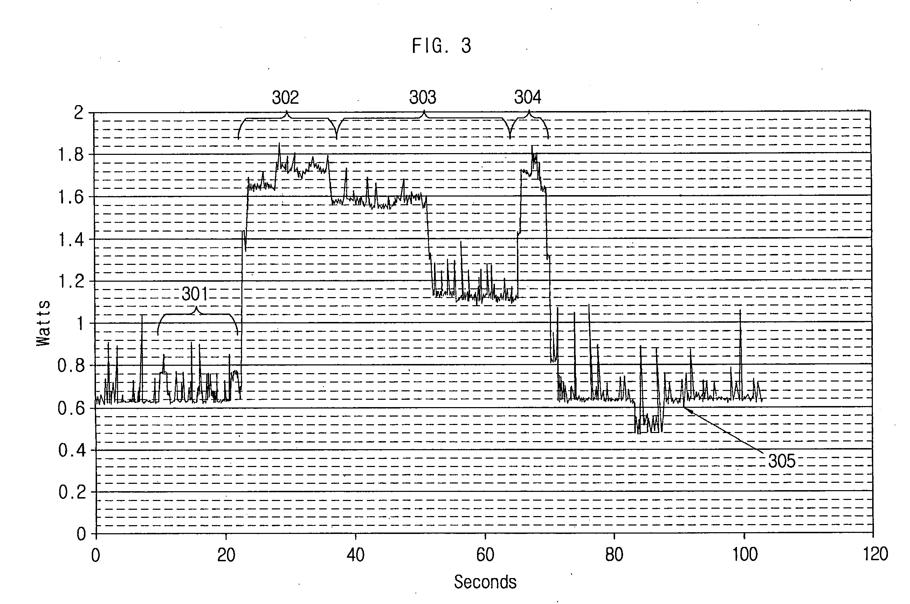

For example, it will be described with reference to the power consumption of mobile phone as shown in FIG. 3. FIG. 3 is a graph showing the power consumption of mobile phone.

The modes of mobile phone depend on the currently-working key or menu selection, and the power consumption also varies accordingly.

Range 301 indicates the situation of requesting a call by dialing, range 302 indicates the situation of waiting a receiver's response with hearing of ring-back tone, range 303 indicates the situation of talking over mobile phone, range 304 indicates the situation of ending a call, and range 305 indicates the situation of sending a call rate message. Since mobile phone operates different components in each of situations, the power consumption varies frequently as shown in FIG. 3.

Therefore controller 240 receives feedback on power demanded for the load such as mobile phone as shown in FIG. 3, and controls to generate hydrogen as much as being demanded so to provide power enough to the load coupled to the fuel cell.

The hydrogen generating apparatus may further comprise an input device for user to manually input the demanded amount of power or hydrogen.

The hydrogen generating apparatus of the present invention can have a plurality of the first electrodes 220 and/or the second electrodes 230. In the case that a plural number of the first electrode 220 and/or the second electrode 230 are disposed, it can take a shorter time to generate the demanded amount of hydrogen since the hydrogen generating apparatus 200 can generate more hydrogen per unit time.

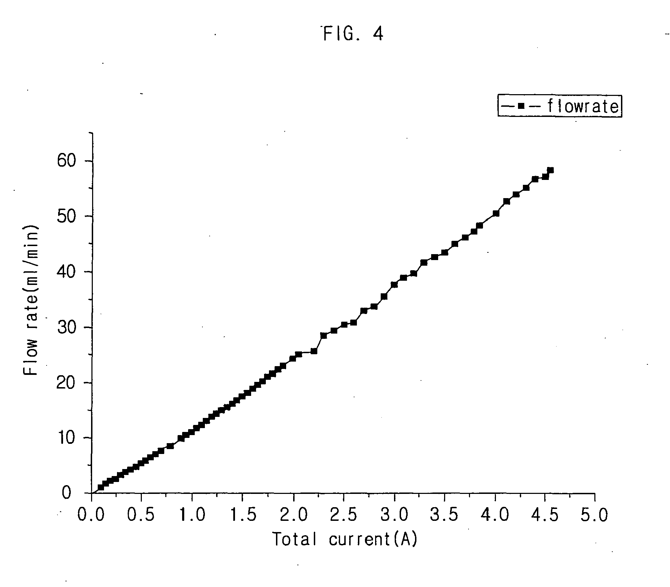

FIG. 4 is a graph showing how the amount of electric current flowing between the first electrode 220 and the second electrode 230 is related to the volume of hydrogen generated on the second electrode 230. Here, it should be noted that the volume of hydrogen is shown in flow-rate measured per minute, because not the total volume of generated hydrogen but the flow-rate of hydrogen is significant to a fuel cell.

An experiment for FIG.3 was conducted under the following conditions:

First electrode 220: Magnesium (Mg)
Second electrode 230: Stainless steel
Distance between the electrodes: 3mm
Ingredients and concentration of electrolyte: 30wt% KCl

Number of the electrodes: Magnesium 3 each, Stainless steel 3 each
Electrode connecting method: Serial
Volume of aqueous electrolyte solution: 60cc (excessive condition)
Size of the electrode: 24 mm x 85 mm x 1 mm

The above conditions were used for every graph referred to in describing the present invention.

FIG. 4 shows a greater flow rate of the hydrogen than a theoretical value based on MATHEMATICAL FORMULA 1, due to an interaction of the three pairs of electrodes.

Nevertheless, it is verified from FIG. 4 that the flow-rate of hydrogen is correlated with the amount of electric current between the first electrode 220 and the second electrode 230. Also, the graph shows an almost linear relation between the flow-rate and the amount of the electric current, which agrees with the MATHEMATICAL FORMULA 1.

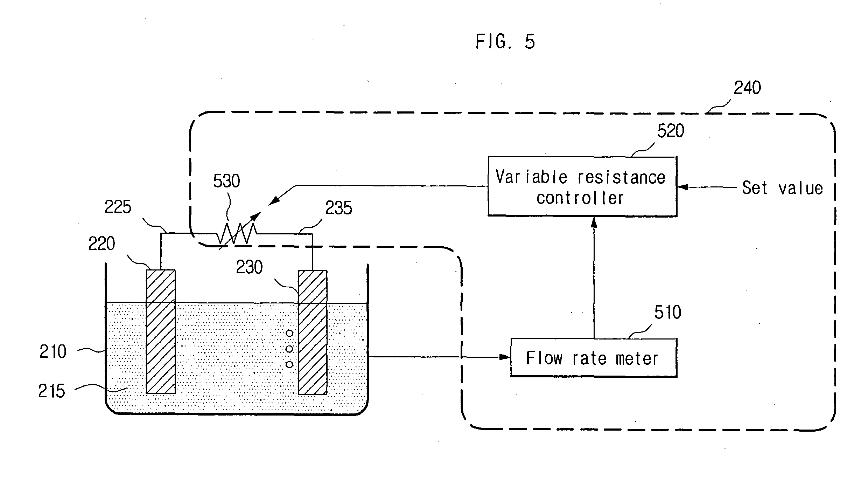

FIG. 5 is a block diagram of the control unit 240 of the hydrogen generating apparatus in accordance with an embodiment of the present invention.

The control unit 240 comprises a flow rate meter 510, a variable resistance controller 520 and a variable resistance 530.

The flow rate meter 510 measures the amount of hydrogen, in units of flow rate, generated from the second electrode 230 of the hydrogen generating apparatus. As described above, in order to use the hydrogen generating apparatus 200 in accordance with the present invention by coupling to a fuel cell, a certain amount of hydrogen generation, not a total quantity of hydrogen generation, should be maintained, and thus it is required that the amount of hydrogen generation be measured in units of ml/min. Of course, it is possible to use other measurement units as long as the unit is capable of measuring the flow rate.

The variable resistance controller 520 is inputted with a set value, which is related to the amount of hydrogen generation. The hydrogen generating apparatus 200 is disposed with a separate input unit (not shown), through which the set value can be inputted by the user. The required amount of output (i.e. electric power, voltage, current, impedance, and a combination thereof) or hydrogen generation may be inputted by a fuel cell that is coupled to the hydrogen generating apparatus 200. In the latter case, the fuel cell may be separately equipped with a hydrogen requiring unit for inputting the amount of output or hydrogen generation that is needed by the hydrogen generating apparatus 200.

The variable resistance controller 520 compares the inputted set value with the amount of hydrogen generation measured by the flow rate meter 510. If the amount of generated hydrogen is smaller than the set value, the resistance value of the variable resistance 530 is changed to increase the amount of hydrogen generation, and if the amount of generated hydrogen is greater than the set value, the resistance value of the variable resistance 530 is controlled to reduce the amount of hydrogen generation. It is assumed that the variable resistance 530 is controlled by a variable resistance control signal such that the variable resistance controller 520 can control the resistance value of the variable resistance 530.

The variable resistance 530 is disposed between the first electrode 220 and the second electrode 230. Transfer of electrons generated in the first electrode 220 to the second electrode 230 becomes slower if the variable resistance 530 is increased, and transfer of the electrons generated in the first electrode 220 to the second electrode 230 becomes faster if the variable resistance 530 is decreased.

That is, the control unit 240 controls the amount of hydrogen generation, using the variable resistance 530 to control the rate of electron transfer from the first electrode 220 to the second electrode 230.

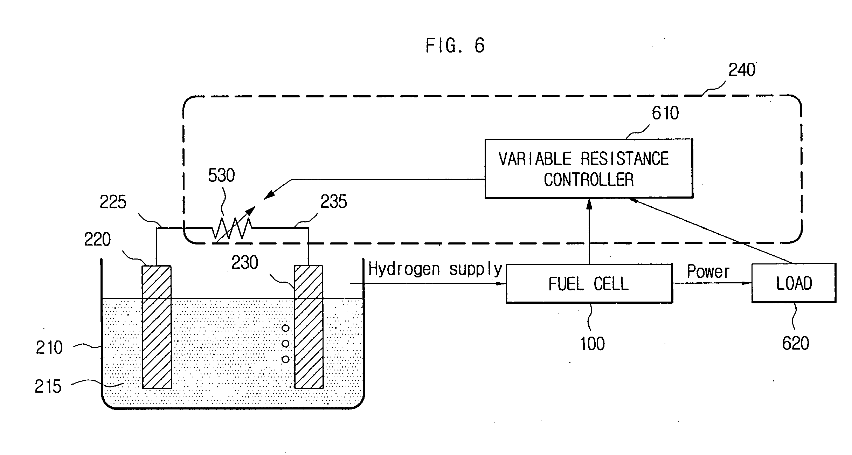

FIG 6 is a fuel cell generating system comprising controller 240 of hydrogen generating apparatus 200, fuel cell coupled thereto, and a load in accordance with another embodiment of the present invention.

The control unit 240 includes a variable resistance controller 610 and a variable resistance 530. Here, the variable resistance 530 functions the same way as described earlier with reference to FIG. 5, and thus their description will be omitted.

The variable resistance controller 610 is coupled to the load 620 to where the fuel cell 100 provides power to. As described above, the load 620 demands different power depending on the currently-working condition (with reference to FIG. 3). Therefore the variable resistance controller 610 receives a demanded power for the currently-working condition of load 620.

And, the variable resistance controller 610 is coupled to the fuel cell 100 to receive an output of the fuel cell 100. The output of fuel cell 100 is, for example, power being provided to the load 620 by the fuel cell 100 that receives hydrogen from the hydrogen generating apparatus 200. As described above, in order to use the hydrogen generating apparatus 200 in accordance with the present invention by coupling to a fuel cell, a certain amount of hydrogen generation, not a total quantity of hydrogen generation, should be maintained, and thus electric power of the fuel cell 100 based on the amount of hydrogen generation is received in units of watt (W). In addition variable resistance controller 610 measures voltage of fuel cell 100 and converts into electric power by use of resistance. Of course, it is possible to use other measurement units as long as the unit is capable of measuring the electric power.

The variable resistance controller 610 compares the output of fuel cell 100 with the demanded power of load 620. In case the output of fuel cell 100 is smaller than the demanded power, the variable resistance controller 610 changes the value of variable resistance 530 to increase the amount of hydrogen generation, and in case the output of fuel cell 100 is greater than the demanded power, the variable resistance controller 610 changes the value of variable resistance 530 to reduce the amount of hydrogen generation. In case the output of fuel cell 100 is within a certain error range compared with the demanded power, current amount of hydrogen generation is maintained. It is assumed that this controlling operation is made by a variable resistance control signal enabling the variable resistance controller 610 to set the value of variable resistance 530.

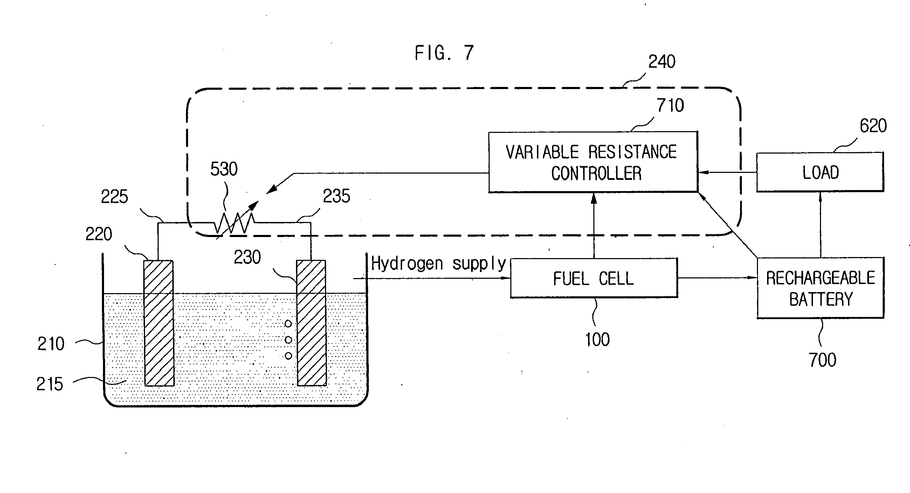

FIG. 7 is a fuel cell power generation system comprising controller 240 of hydrogen generating apparatus 200, fuel cell coupled thereto, and a load in accordance with still another embodiment of the present invention.

The control unit 240 includes a variable resistance controller 710 and a variable resistance 530. Here, the variable resistance 530 functions the same way as described earlier with reference to FIG. 5, and thus repetitive description will be omitted.

When compared with the fuel cell power generation system as shown in FIG. 6, the fuel cell power generation system in FIG. 7 further comprises a rechargeable battery 700. Since fuel cell has slow responsiveness, it is not possible to instantaneously respond to a peak power from the load 620. Thus it becomes possible to respond to peak power by charging the rechargeable battery in advance.

The variable resistance controller 710 measures voltage of rechargeable battery 700 to continuously generate hydrogen for the rechargeable battery 700 to be fully charged and for fuel cell 100 to keep providing voltage.

And the variable resistance controller 620 provides the charged voltage of rechargeable battery 700, and thus in case the voltage of rechargeable battery 700 drops, makes the hydrogen generating apparatus 200 to generate hydrogen.

Namely, the variable resistance controller 710 compares present voltage of the rechargeable battery 700 with fully-charged voltage. The fully-charged voltage means the voltage at when the rechargeable battery 700 is fully charged. In case the present voltage is smaller than the fully-charged voltage, then the value of variable resistance 530 is changed to increase the amount of hydrogen generation, and in case the present voltage is equal to or greater than the fully-charged voltage, then the value of variable resistance 530 is changed to stop hydrogen generation. It is assumed that this controlling operation is made by a variable resistance control signal enabling the variable resistance controller 710 to set the value of variable resistance 530.

Here, the rechargeable battery 700 may be a super capacitor or a small rechargeable battery. Super capacitor has the enhanced electric capacity, and can charge and discharge the electric power if necessary.

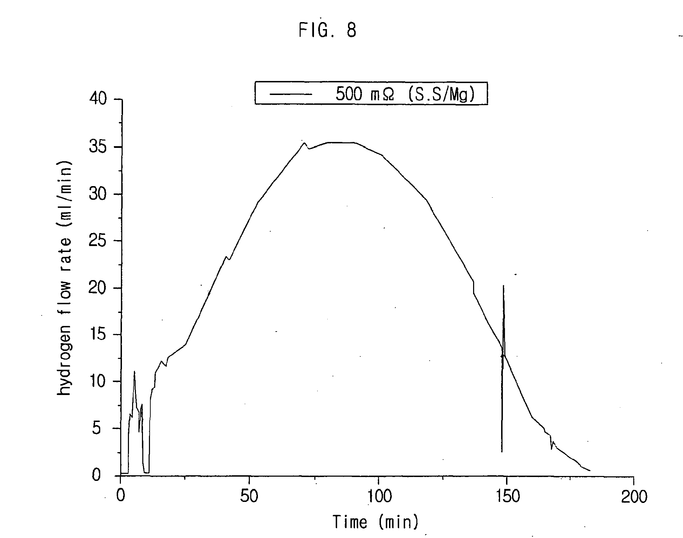

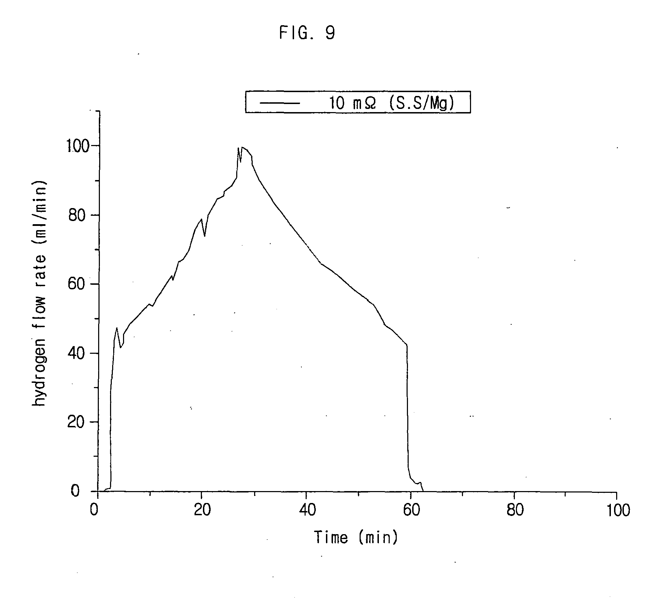

FIG. 8 is a graph indicating quantities of generated hydrogen, expressed in flow rate, when the resistance value of the variable resistance is 500m$\Omega$, and FIG. 9 is a graph indicating quantities of generated hydrogen, expressed in flow rate, when the resistance value of the variable resistance is 10m$\Omega$. Here, the unit of flow rate is ml/min, which represents the amount of hydrogen generation per minute.

Since the amount of current differs between 500m$\Omega$ and 10m$\Omega$ of variable resistance 430, different amounts of hydrogen generation are generated.

Referring to FIGS. 8 and 9, the maximum amount of hydrogen generation is 35ml/min when the variable resistance is 500m$\Omega$, and the maximum amount of hydrogen generation is over 100ml/min, which is close to three times of that of 500m$\Omega$, when the variable resistance is 10m$\Omega$. This indicates that a desired amount of hydrogen generation can be obtained by properly controlling the resistance value of the variable resistance 530.

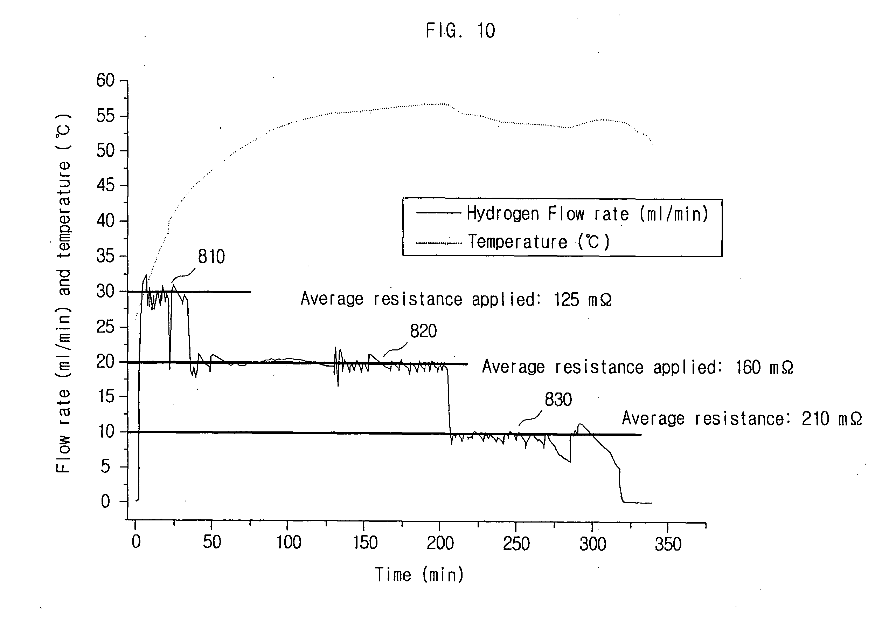

FIG. 10 shows the relation between time and quantity of hydrogen generation when the variable resistance of the hydrogen generating apparatus is controlled in accordance with an embodiment of the present invention. Here, the amount of hydrogen generation was adjusted to 30ml/min 1010, 20ml/min 1020 and 10ml/min 1030 by controlling the variable resistance. It can be seen that the temperature never reached above 60$\square$.

In FIG. 10, the flow rate of 30ml/min is maintained while the variable resistance is gradually increased from 125m$\Omega$, as illustrated in the portion represented by 1010. Then, the resistance is suddenly increased to 160m$\Omega$, and the flow rate is maintained at 20ml/min, as illustrated in the portion represented by 1020. The resistance is again increased to 210m$\Omega$, and the flow rate of 10ml/min is maintained, as illustrated in the portion represented by 1030.

As shown in FIGS. 8 and 9, in the hydrogen generating apparatus in accordance with an embodiment of the present invention that generates hydrogen by use of water, the amount of hydrogen generation increases as the temperature and reaction speed increase at the beginning. Then; after some time has elapsed, the amount of hydrogen generation steadily decreases as the metal and water, constituting the first electrode, is used at a constant rate.

Therefore, it becomes possible to maintain the amount of hydrogen generation, as shown in FIG. 10, by properly controlling the resistance between the first electrode 220 and the second electrode 230.

Moreover, the amount of hydrogen generation measured in units of flow rate in FIGS. 9 to 10 may be electric power or voltage, output from the fuel cell 100 in a hydrogen generating apparatus 200 shown in FIG. 6 or 7. For example, the flow rate of 42ml/min shown in FIGS. 8 to 10 can correspond to 2W, depending on the operation condition of the fuel cell 100.

In other words, the earlier-measured amounts of hydrogen generation correspond to the output of the fuel cell (i.e., electric power or voltage) that is measured by the variable resistance controller 610, 710 as shown in FIG. 6 or 7. The amount of hydrogen generation to be controlled through the variable resistance corresponds to the output of the fuel cell, that is, electric power or voltage.

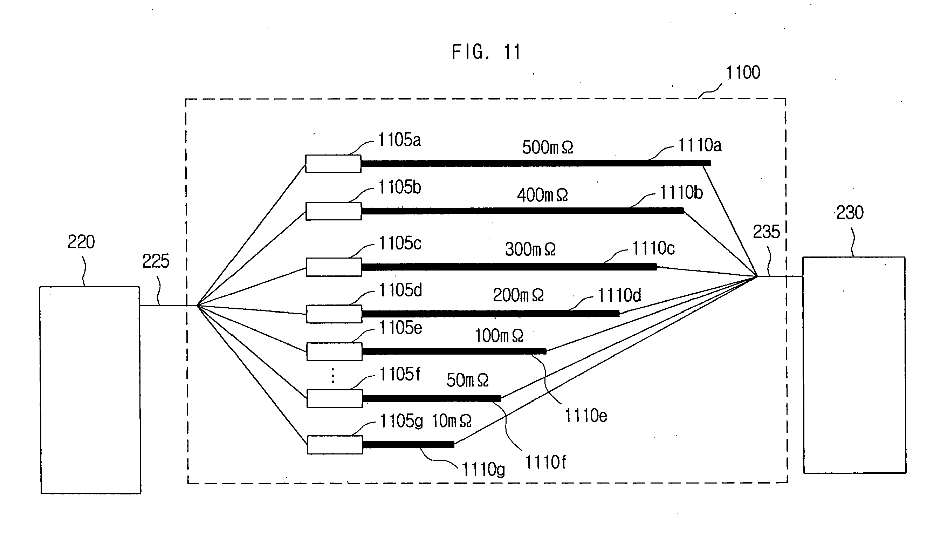

The variable resistance between the first electrode 220 and the second electrode 230 has a very small resistance value, mostly below 500m$\Omega$.. It is possible to vary the resistance value through a line of circuit and a MOS switch using a MOS (metal-oxide semiconductor) transistor. It is possible that a single chip in the form of an ASIC chip realize an embodiment of the present invention. This will be described with reference to FIG. 11.

Fig. 11 is an example of variable resistance in accordance with one embodiment of the present invention.

The ASIC 1100 connected between the first electrode 220 and the second electrode 230 includes lines having difference resistance values 1110a - 1110g. The lines 1110a - 1110g have difference resistance values due to length, thickness, or combination thereof. The first electrode 220 and each of lines are connected through MOS switches 1105a - 1105g. The resistance value of ASIC 1100 is determined by the resistances of lines being connected to the turn-on MOS switch. It is possible to change the number of lines 1110 and MOS switches 1105, and for ASIC 1100 to have a new resistance value by turning on more than two MOS switches to connect more than two resistances of lines in parallel.

The variable resistance controller of the hydrogen generating apparatus in accordance with an embodiment of the present invention can use a power circuit of the fuel cell and be included in a control unit of a fuel cell generating system. In other words, by including the variable resistance controller in the control unit of a fuel cell generating system, the variable resistance controller and the control unit of the fuel cell generating system can be made into one chip.

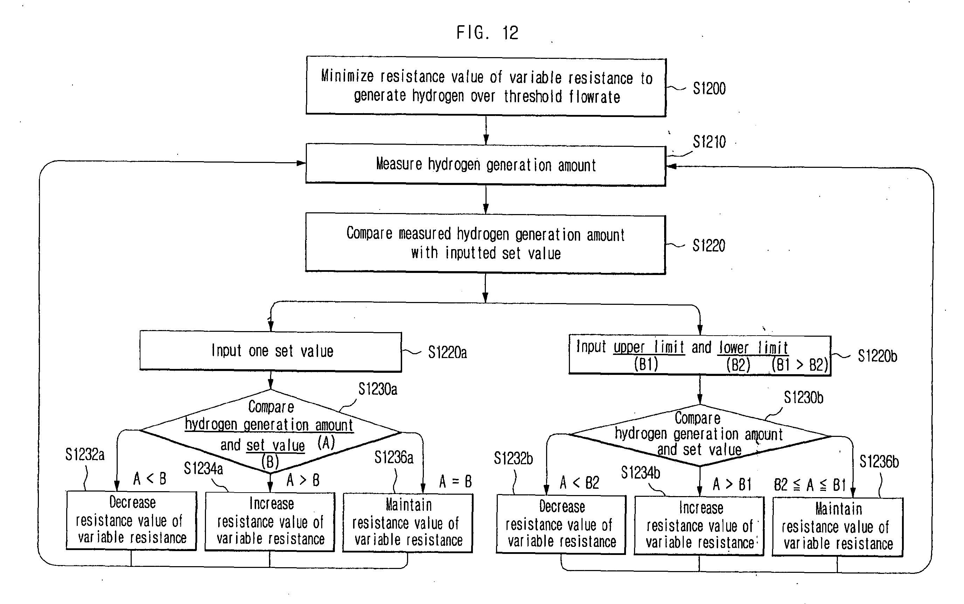

FIG. 12 is a flowchart showing a method of controlling the amount of hydrogen generation in a hydrogen generating apparatus in accordance with an embodiment of the present invention. The hydrogen generating apparatus is illustrated in FIG. 5.

The variable resistance controller 520 of the hydrogen generating apparatus 200 minimizes the variable resistance 530 and generates hydrogen over a certain threshold of flow rate, in the step represented by S1200.

In step S 1210, the flow rate meter 510 measures the amount of hydrogen generation, and in step S1220 the variable resistance controller 520 compares the amount of hydrogen generation, measured by the flow rate meter 510, with an inputted set value. Here, the inputted set value can be one value, as shown in step S1220a, or have an upper limit and a lower limit with a range, as shown in step S1220b.

The variable resistance controller 520 changes the resistance value of the variable resistance 530 according to the set value.

If one set value is inputted, as shown in step S1220a, the amount of hydrogen generation (A) and the set value (B) are compared in step S1230a. In case the amount of hydrogen generation is smaller than the set value (A<B), the resistance value of the variable resistance is increased in step S1232a, and if the amount of hydrogen generation is greater than the set value (A>B), the resistance value of the variable resistance is reduced in step S1234a. If the amount of hydrogen generation is equal to the set value (A=B), the resistance value of the variable resistance is maintained, in step S1236a.

In case the upper limit and the lower limit are inputted in step S1220b, the amount of hydrogen generation (A), the upper limit (B1) and the lower limit (B2) are compared in step S1230b. If the amount of hydrogen generation is smaller than the lower limit (A<B2), the resistance value of the variable resistance is increased in step S1232b, and if the amount of hydrogen generation is greater than the upper limit (A>B1), the resistance value of the variable resistance is reduced in step S1234b. If the amount of hydrogen generation is between the upper limit and the lower limit (B2=A=B1), the resistance value of the variable resistance is maintained in S1236b.

By repeating steps S1220 to S1236a or S1236b, the hydrogen generating apparatus 200 can generate the amount of hydrogen according to the inputted set value.

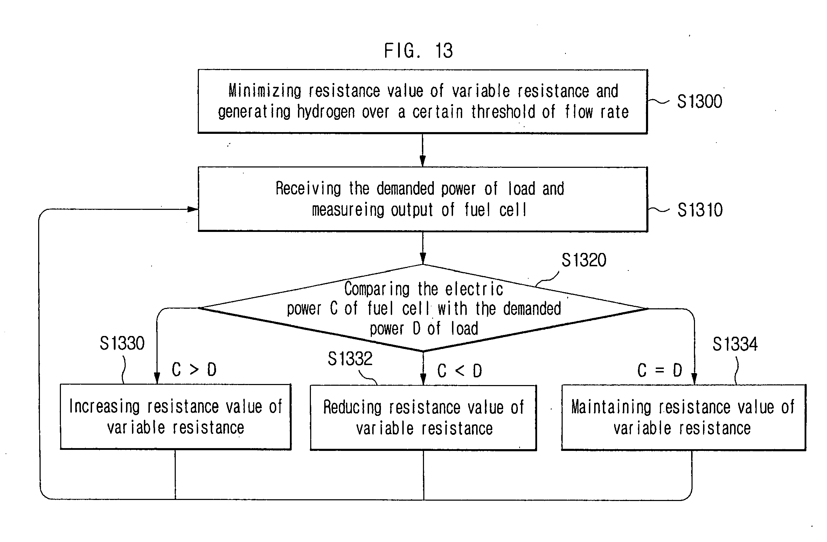

FIG. 13 is a flowchart showing a method of controlling the amount of hydrogen generation in a hydrogen generating apparatus in accordance with another embodiment of the present invention. The hydrogen generating apparatus is illustrated in FIG. 6.

The variable resistance controller 610 of the hydrogen generating apparatus 200 minimizes the variable resistance 530 and generates hydrogen over a certain threshold of flow rate, in the step represented by S 1300.

The variable resistance controller 610 measures output of fuel cell connected to the hydrogen generating apparatus 200, and receives the demanded power of load 620 connected to the fuel cell 100, in the step represented by S 1310. Here, the output of fuel cell 100 may be one of electric power or voltage, and in case of voltage, electric power can be calculated by the use of resistance.

And, the variable resistance controller 610 compares the electric power C of fuel cell 100 with the demanded power D of load 620 at step S 1320.

According to the comparison, in case the electric power of fuel cell 100 is greater than the demanded power (C>D), the resistance value of variable resistance is increased at step S1330, in case the electric power of fuel cell 100 is smaller than the demanded power (C<D), the resistance value of variable resistance is reduced at step S 1332, and in case the electric power of fuel cell 100 is equal to the demanded power (C=D), the resistance value of variable resistance is maintained at step S1334. Here, "equal to" means that the electric power of fuel cell 100 falls within the predetermined error range based on the demanded power.

Then, by repeating steps S 1310 to S 1330, S 1332 or S 1334, the hydrogen generating apparatus 200 can control the amount of hydrogen generation for the fuel cell to provide output corresponding to the demanded power of load.

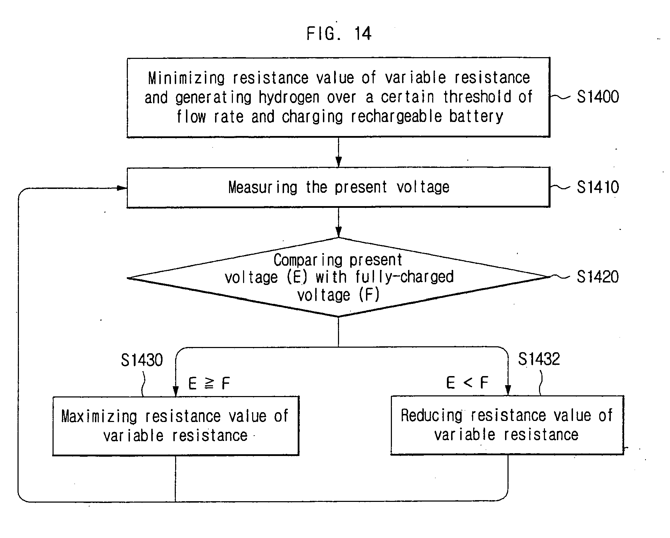

FIG. 14 is a flowchart of a method of controlling the quantity of hydrogen generation in a hydrogen generating apparatus in accordance with another embodiment of the present invention. The hydrogen generating apparatus of FIG. 17 is illustrated in FIG. 7.

By minimizing the variable resistance 530 to generate hydrogen over a certain threshold of flow rate, the variable resistance controller 710 of the hydrogen generating apparatus 200 operates the fuel cell 100 and charges the rechargeable battery 700 being connected between the fuel cell 100 and the load 620 in the step represented by S 1400.

The variable resistance controller 710 measures the voltage of rechargeable battery 700 at step S1410, and compares the fully-charged voltage F of the rechargeable battery 700 with the present voltage E at step S 1420.

According to the comparison, in case the present voltage is equal to or greater than the fully-charged voltage ($E \geq F$), the variable resistance controller 710 maximizes the resistance value of variable resistance to prevent the rechargeable battery 700 from being charged at step S1430, and in case the present voltage is equal to or greater than the fully-charged voltage ($E < F$), the variable resistance controller 710 reduces the resistance value of variable resistance at step S1432. Here, "equal to" means that the present voltage falls within the predetermined error range based on the fully-charged voltage.

Then, by repeating steps S 1410 to S1430, or S 1432 the hydrogen generating apparatus 200 can control the rechargeable battery 700 to be fully charged for being prepared to the peak power demanded from the load 620.

In the above method of controlling the amount of hydrogen generation, steps S1220 to S1236a or S1236b, or steps S1320 to S 1330 or S 1334, or steps S1420 to S1430 or S1432 can be written in a computer program. Codes and code segments, composing the program, can be easily realized by a computer programmer skilled in the art. Moreover, the program is stored in a computer readable medium, and realizes the method of controlling the amount of hydrogen generation by being read and run by a computer. The computer readable medium described above includes a magnetic recording medium, an optical recording medium and a carrier wave medium.

The drawings and detailed description are only examples of the present invention, serve only for describing the present invention and by no means limit or restrict the spirit and scope of the present invention. Thus, any person of ordinary skill in the art shall understand that a large number of permutations and other equivalent embodiments are possible. The true scope of the present invention must be defined only by the ideas of the appended claims.

## Claims

1. A hydrogen generating apparatus comprising:

   an electrolyzer, filled with an aqueous electrolyte solution;
   a first electrode, accommodated in the electrolyzer, submerged in the aqueous electrolyte solution, and generating electrons;
   a second electrode, accommodated in the electrolyzer, submerged in the aqueous electrolyte solution, receiving the electrons to generate hydrogen;
   a variable resistance, located between the first electrode and the second electrode;
   a flow rate meter, measuring an amount of hydrogen generation in the second electrode; and
   a variable resistance controller, receiving a set value, comparing the amount of hydrogen generation measured by the flow rate meter with the set value, and controlling a resistance value of the variable resistance.

2. The apparatus of claim 1, in which the variable resistance controller is inputted with the set value directly from a user through an input unit or a fuel cell being coupled to the hydrogen generating apparatus.

3. The apparatus of claim 1, in which a metal forming the first electrode has a higher ionization tendency than a metal forming the second electrode.

4. The apparatus of claim 1, in which the variable resistance controller decreases the amount of hydrogen generation by increasing a resistance value of the variable resistance or increases the amount of hydrogen generation by decreasing a resistance value of the variable resistance.

5. The apparatus of claim 1, in which the variable resistance controller compares the set value with the measured amount of hydrogen generation, and decreases the resistance value of the variable resistance if the amount of hydrogen generation is smaller than the set value, increases the resistance value of the variable resistance if the amount of hydrogen generation is greater than the set value, and maintains the resistance value of the variable resistance if the amount of hydrogen generation is equal to the set value.

6. The apparatus of claim 1, in which the set value comprises an upper limit and a lower limit,
and the variable resistance controller compares the set value with the measured amount of hydrogen generation, and decreases the resistance value of the variable resistance if the amount of hydrogen generation is smaller than the lower limit, increases the resistance value of the variable resistance if the amount of hydrogen generation is greater than the upper limit, and maintains the resistance value of the variable resistance if the amount of hydrogen generation is between the lower limit and the upper limit.

7. The apparatus of claim 1, in which the variable resistance comprises a plurality of line resistances, and a plurality of MOS switches being coupled to each of the plurality of line resistances.

8. A fuel cell power generation system comprising:

   a hydrogen generating apparatus, controlling an amount of hydrogen generation by controlling a resistance value of a variable resistance coupled between electrodes;
   a fuel cell, being supplied with hydrogen generated by the hydrogen generating apparatus and converting chemical energy of the hydrogen to electrical energy; and
   a load, being provided the electric energy and performing a predetermined operation.

9. The system of claim 8, in which the hydrogen generating apparatus comprises:

   an electrolyzer, filled with an aqueous electrolyte solution;
   a first electrode, accommodated in the electrolyzer, submerged in the aqueous electrolyte solution, and generating electrons;
   a second electrode, accommodated in the electrolyzer, submerged in the aqueous electrolyte solution, receiving the electrons to generate hydrogen;
   a variable resistance, located between the first electrode and the second electrode; and
   a variable resistance controller, receiving a demanded power from the load, measuring an output of the fuel cell, comparing the demanded power with the output, and controlling the resistance value of the variable resistance.

10. The system of claim 9, in which a metal forming the first electrode has a higher ionization tendency than a metal forming the second electrode.

11. The system of claim 9, in which the variable resistance controller reduces an amount of hydrogen generation by increasing the resistance value of the variable resistance or increases the amount of hydrogen generation by reducing the resistance value of the variable resistance.

12. The system of claim 9, in which the variable resistance controller compares the demanded power with the output, and increases the resistance value of the variable resistance if the output is greater than the demanded power, reduces the resistance value of the variable resistance if the output is smaller than the output, and maintains the resistance value of the variable resistance if the output is equal to the output.

13. The system of claim 8 further comprising
a rechargeable battery, being coupled between the fuel cell and the load, being charged by the electric energy from the fuel cell, and providing the charged electric energy when the load needs.

14. The system of claim 13, in which the hydrogen generating apparatus comprises:

   an electrolyzer, filled with an aqueous electrolyte solution;
   a first electrode, accommodated in the electrolyzer, submerged in the aqueous electrolyte solution, and generating electrons;
   a second electrode, accommodated in the electrolyzer, submerged in the aqueous electrolyte solution, receiving the electrons to generate hydrogen;

a variable resistance, located between the first electrode and the second electrode; and
a variable resistance controller, measuring a present voltage of the rechargeable battery, comparing a fully-charged voltage with the present voltage, and controlling the resistance value of the variable resistance.

15. The system of claim 14, in which a metal forming the first electrode has a higher ionization tendency than a metal forming the second electrode.

16. The system of claim 14, in which the variable resistance controller reduces an amount of hydrogen generation by increasing the resistance value of the variable resistance or increases the amount of hydrogen generation by reducing the resistance value of the variable resistance.

17. The system of claim 14, in which the variable resistance controller compares the present voltage with the fully-charged voltage, and reduces the resistance value of the variable resistance if the present voltage is smaller than the fully-charged voltage, and maximizes the resistance value of the variable resistance if the present voltage is equal to or greater than the fully-charged voltage.

18. The apparatus of claim 9 or claim 14, in which the variable resistance comprises a plurality of line resistances, and a plurality of MOS switches being coupled to each of the plurality of line resistances.

19. A method of controlling an amount of hydrogen generation in a hydrogen generating apparatus controlling an amount of hydrogen generation by controlling a resistance value of a variable resistance located between electrodes, the method comprising:

being inputted with a set value;
comparing a measured amount of hydrogen generation and the set value; and
decreasing the resistance value of the variable resistance if the amount of hydrogen generation is smaller than the set value, increasing the resistance value of the variable resistance if the amount of hydrogen generation is greater than the set value, and maintaining the resistance value of the variable resistance if the amount of hydrogen generation is equal to the set value.

20. A method of controlling an amount of hydrogen generation in a hydrogen generating apparatus controlling an amount of hydrogen generation by controlling a resistance value of a variable resistance located between electrodes, the method comprising:

being inputted with an upper value and a lower value;
comparing a measured amount of hydrogen generation with the upper value and the lower value; and
decreasing the resistance value of a variable resistance if the amount of hydrogen generation is smaller than the lower value, increasing the resistance value of a variable resistance if the amount of hydrogen generation is greater than the upper value, and maintaining the resistance value of a variable resistance if the amount of hydrogen generation is between the lower value and the upper value.

21. A method of controlling an amount of hydrogen generation in a hydrogen generating apparatus being coupled to a fuel cell of providing an electric energy to a load and controlling an amount of hydrogen generation by controlling a resistance value of a variable resistance located between electrodes, the method comprising:

measuring an output of the fuel cell, and receiving a demanded power from the load;
comparing the output with the demanded power; and
increasing the resistance value of the variable resistance if the output is greater than the demanded power, reducing the resistance value of the variable resistance if the output is smaller than the output, and maintaining the resistance value of the variable resistance if the output is equal to the output.

22. A method of controlling an amount of hydrogen generation in a hydrogen generating apparatus being coupled to a fuel cell of providing an electric energy to a load and controlling an amount of hydrogen generation by controlling a resistance value of a variable resistance located between electrodes, the method comprising:

measuring a present voltage of the rechargeable battery;
comparing the present voltage with a fully-charged voltage; and
reducing the resistance value of the variable resistance if the present voltage is smaller than the fully-charged voltage, and maximizing the resistance value of the variable resistance if the present voltage is equal to or greater than the fully-charged voltage.

FIG. 1

FIG. 2

FIG. 3

FIG. 4

FIG. 5

FIG. 6

FIG. 7

FIG. 8

FIG. 9

FIG. 10

FIG. 11

FIG. 11

## FIG. 12

```
┌──────────────────────────────────────────────────┐
│ Minimize resistance value of variable resistance to │ ─── S1200
│     generate hydrogen over threshold flowrate        │
└──────────────────────────────────────────────────┘
                        │
                        ▼
┌──────────────────────────────────────────────────┐ ─── S1210
│         Measure hydrogen generation amount          │
└──────────────────────────────────────────────────┘
                        │
                        ▼
┌──────────────────────────────────────────────────┐
│       Compare measured hydrogen generation amount   │ ─── S1220
│              with inputted set value                 │
└──────────────────────────────────────────────────┘
```

┌─────────────────────────────┐              ┌──────────────────────────────────────┐
│      Input one set value     │ ─ S1220a     │ Input upper limit and lower limit       │ ─ S1220b
└─────────────────────────────┘              │        (B1)            (B2)  (B1 > B2)   │
                                              └──────────────────────────────────────┘

Compare hydrogen generation amount and set value (A) ─ S1230a
(B)

| S1232a | S1234a | S1236a |
|---|---|---|
| A < B | A > B | A = B |
| Decrease resistance value of variable resistance | Increase resistance value of variable resistance | Maintain resistance value of variable resistance |

Compare hydrogen generation amount and set value ─ S1230b

| S1232b | S1234b | S1236b |
|---|---|---|
| A < B2 | A > B1 | B2 ≦ A ≦ B1 |
| Decrease resistance value of variable resistance | Increase resistance value of variable resistance | Maintain resistance value of variable resistance |

EP 1 970 472 A1

## FIG. 13

Minimizing resistance value of variable resistance and
generating hydrogen over a certain threshold of flow rate — S1300

↓

Receiving the demanded power of load and
measureing output of fuel cell — S1310

Comparing the electric
power C of fuel cell with the demanded
power D of load — S1320

S1330 — C > D    S1332 — C < D    C = D — S1334

| Increasing resistance value of variable resistance | Reducing resistance value of variable resistance | Maintaining resistance value of variable resistance |
|---|---|---|

EP 1 970 472 A1

## FIG. 14

```
┌─────────────────────────────────────────────────┐
│ Minimizing resistance value of variable resistance│
│ and generating hydrogen over a certain threshold of│ ~ S1400
│ flow rate and charging rechargeable battery       │
└─────────────────────────────────────────────────┘
                        │
                        ▼
┌─────────────────────────────────────────────────┐
│           Measuring the present voltage           │ ~ S1410
└─────────────────────────────────────────────────┘
                        │
                        ▼
              Comparing present
         voltage (E) with fully-charged          ~ S1420
                  voltage (F)
```

S1430    E ≧ F         E < F   S1432

```
┌──────────────────────────────┐      ┌──────────────────────────────┐
│ Maximizing resistance value of│      │ Reducing resistance value of │
│      variable resistance      │      │      variable resistance      │
└──────────────────────────────┘      └──────────────────────────────┘
```

**European Patent Office**

## EUROPEAN SEARCH REPORT

Application Number

EP 08 25 0020

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 755 128 A (HERWIG W) 28 August 1973 (1973-08-28) * figure 1 * * column 1, line 2 - line 16 * * column 1, line 53 - line 64 * * column 2, line 3 - line 38 * * column 5, line 14 - column 6, line 4 * ----- | 1-7 | INV. C25B15/02 H01M8/04 H01M8/06 H01M16/00 |
| X | US 3 485 742 A (EMICH KARL H ET AL) 23 December 1969 (1969-12-23) * the whole document * ----- | 1-7 | |
| X | US 2004/229090 A1 (DAVIS STUART M [US] ET AL) 18 November 2004 (2004-11-18) * figures * * paragraphs [0007], [0008], [0015], [0040] - [0043], [0049], [0056], [0082], [0084] - [0086], [0089], [0098], [0099] * ----- | 8-12, 19-21 | |
| X Y | US 4 436 793 A (ADLHART OTTO J [US]) 13 March 1984 (1984-03-13) * figure 1 * * column 1, lines 24-50 * * column 2, lines 11-29 * * column 2, line 54 - column 5, line 6 * * column 8, line 14 - column 9, line 54 * ----- | 8-13, 19-21 14-18,22 | **TECHNICAL FIELDS SEARCHED (IPC)** C25B H01M C01B |
| Y | US 2003/113601 A1 (EDLUND DAVID J [US] ET AL) 19 June 2003 (2003-06-19) * figure 1 * * paragraphs [0030] - [0034] * * paragraph [0037] * * paragraphs [0042] - [0047] * ----- | 14-18,22 | |
| A | US 1 588 214 A (WALSH ROBERT L) 8 June 1926 (1926-06-08) * figure 1 * ----- | 1-7 | |

-/--

The present search report has been drawn up for all claims

| Place of search | Date of completion of the search | Examiner |
|---|---|---|
| The Hague | 16 July 2008 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 08 25 0020

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 25 29 036 A1 (PACHECO FRANCISCO) 20 January 1977 (1977-01-20) * figure 1 * ----- | 1-7 | |

TECHNICAL FIELDS SEARCHED (IPC)

The present search report has been drawn up for all claims

| Place of search | Date of completion of the search | Examiner |
|---|---|---|
| The Hague | 16 July 2008 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 25 0020

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2008

| Patent document cited in search report | | Publication date | Patent family member(s) | | Publication date |
|---|---|---|---|---|---|
| US 3755128 | A | 28-08-1973 | NONE | | |
| US 3485742 | A | 23-12-1969 | DE | 1767444 A1 | 09-09-1971 |
| | | | FR | 1564328 A | 18-04-1969 |
| | | | GB | 1165512 A | 01-10-1969 |
| US 2004229090 | A1 | 18-11-2004 | BR | PI0410321 A | 23-05-2006 |
| | | | CN | 1853005 A | 25-10-2006 |
| | | | EP | 1629561 A2 | 01-03-2006 |
| | | | JP | 2007503705 T | 22-02-2007 |
| | | | US | 2006183010 A1 | 17-08-2006 |
| | | | US | 2007092769 A1 | 26-04-2007 |
| | | | WO | 2004105171 A2 | 02-12-2004 |
| US 4436793 | A | 13-03-1984 | NONE | | |
| US 2003113601 | A1 | 19-06-2003 | NONE | | |
| US 1588214 | A | 08-06-1926 | NONE | | |
| DE 2529036 | A1 | 20-01-1977 | NONE | | |

EPO FORM P0459

For more details about this annex : see Official Journal of the European Patent Office, No. 12/82